# EUROPÄISCHE PATENTSCHRIFT

(11) **EP 0 583 607 B1**
(45) Veröffentlichungstag und Bekanntmachung des Hinweises auf die Patenterteilung: **28.10.1998**
(21) Anmeldenummer: 93111125.6
(22) Anmeldetag: 12.07.1993
(51) Int. Cl.: C09B 55/00, C09B 56/02

(54) **Unsymmetrische 1:2-chromkomplexfarbstoffe**
Asymmetrie 1:2-chromium complex dyestuffs
Colorants complexes de chrome 1:2 asymétriques

(30) Priorität: 24.07.1992 DE 4224558
(43) Veröffentlichungstag der Anmeldung: 23.02.1994
(73) Patentinhaber: BAYER AG, 51368 Leverkusen (DE)
(72) Erfinder: Mennicke, Winfried, Dr., D-51375 Leverkusen (DE)

(56) Entgegenhaltungen:
- EP-A- 0 043 794
- EP-A- 0 072 501
- EP-A- 0 175 204
- FR-A- 2 174 926
- FR-A- 2 392 087

## Beschreibung

Die vorliegende Erfindung betrifft unsymmetrische 1:2-Chromkomplexfarbstoffe der Formel (I) 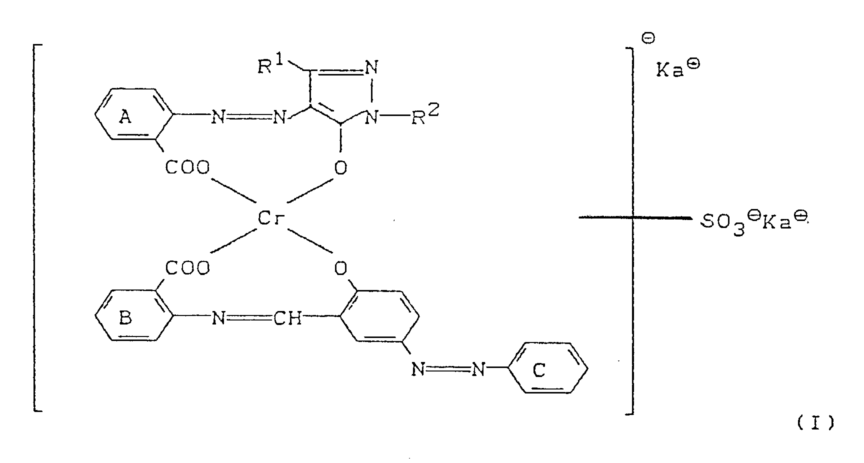 worin
- R¹: für Alkyl, Aryl, Alkoxycarbonyl, Aminocarbonyl oder CN,
- R²: für H, Alkyl oder Aryl,
- Ka^{⊕}: für ein Kation steht,
und die Sulfogruppe -SO₃^{⊖}Ka^{⊕} an Ring A, B oder C oder an R², falls dieses Aryl bedeutet, gebunden ist und die Ringe A, B und C und die Substituenten R¹ und R² weitere in der Chemie der Metallkomplexfarbstoffe übliche Substituenten mit Aufnahme von Sulfo tragen können,
mit der Maßgabe, daß Ring C keine Nitrogruppe enthält.

Derartige Substituenten sind beispielsweise
- Cl, NO₂, Alkyl, Aminosulfonyl oder Acylamino im Falle von Ring A und B,
- Cl, Er, NO₂, Alkyl, Alkoxy, Trifluormethyl, Aminosulfonyl, Aminocarbonyl, Alkylsulfonyl, Arylsulfonyl, Acylamino, CN oder Acyl im Falle von R², falls dieses für Aryl steht, und
- Cl, Br, Alkyl, Alkoxy, Trifluormethyl, Aminosulfonyl, Aminocarbonyl, Alkylsulfonyl, Arylsulfonyl, Acylamino, CN, NH₂, OH oder Acyl im Falle von Ring C.

Bevorzugte Substituenten für den Ring C sind Cl und CH₃. Die genannten Ringe sind gegebenenfalls 1- bis 3-fach, vorzugsweise 1- bis 2-fach durch die oben genannten Substituenten substituiert.

Bevorzugte Alkyl- und Alkoxygruppen sind solche mit 1 bis 4 C-Atomen, die gegebenenfalls weiter substituiert sein können, beispielsweise durch CN, Cl, OH, C₁-C₄-Alkoxy oder gegebenenfalls substituiertes Phenyl. Besonders bevorzugt sind Methyl oder Methoxy.

Acylamino steht vorzugsweise für C₁-C₄-Alkylcarbonylamino, C₁-C₄-Alkoxycarbonylamino, C₁-C₄-Alkylsulfonylamino, Arylcarbonylamino oder Arylsulfonylamino, während Acyl vorzugsweise für C₁-C₄-Alkylcarbonyl steht.

Die Aminosulfonyl- und Aminocarbonylgruppen können jeweils mono- oder disubstituiert sein, beispielsweise durch gegebenenfalls substituiertes C₁-C₄-Alkyl oder durch Aryl.

Bevorzugte Arylreste sind insbesondere gegebenenfalls substituierte Phenylreste mit Substituenten wie Cl, Br, NO₂, C₁-C₄-Alkyl oder C₁-C₄-Alkoxy.

Das durch das Symbol Ka^{⊕} dargestellte Kation ist vorzugsweise ein Alkaliion, insbesondere ein Lithium-, Natrium- oder Kaliumion, ein Ammoniumion oder das Kation eines organischen Amins, insbesondere ein mono-, di-, tri- oder tetra-niedrigalkylsubstituiertes Ammoniumion.

Bevorzugte Farbstoffe entsprechen der Formel (II), 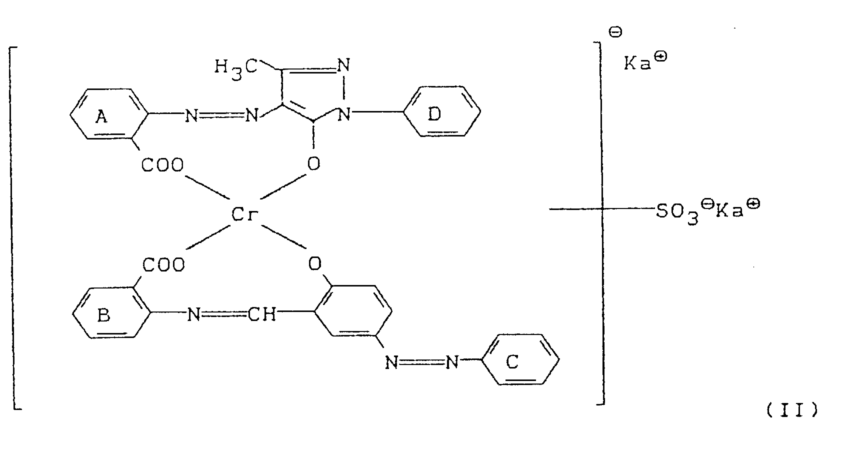 worin
die Ringe A, B und C wie oben definiert weiter substituiert sein können,
der Ring D weitere in der Chemie der Metallkomplexfarbstoffe übliche Substituenten tragen kann,
Ka^{⊕} die oben angegebene Bedeutung hat, und die
SO₃^{⊖}Ka^{⊕}-Gruppe am Ring A, B, C oder D gebunden ist.

Besonders bevorzugt sind die Farbstoffe der Formel (III) 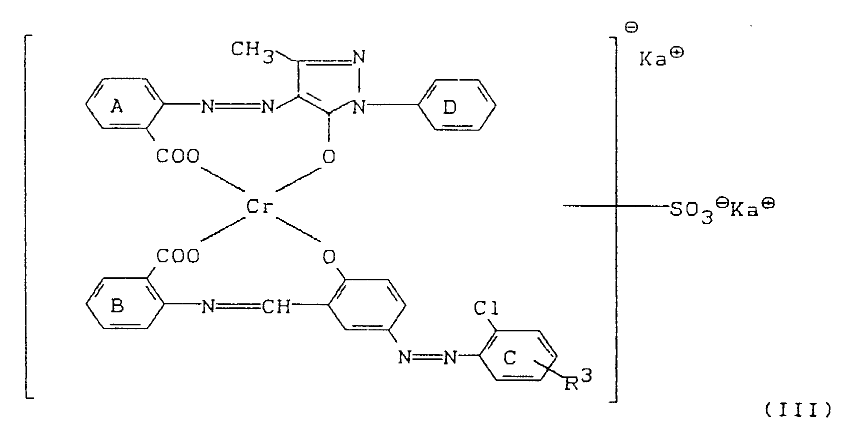 worin
- R³: für H, Cl, OCH₃, SO₂NH₂ oder CH₃ steht,

die Ringe A und B jeweils gegebenenfalls 1- bis 3-fach, gleich oder verschieden durch Cl, NO₂, C₁-C₄-Alkyl, Aminosulfonyl, C₁-C₄-(Di)-alkylaminosulfonyl, C₁-C₄-Alkylcarbonylamino, C₁-C₄-Alkoxycarbonylamino, C₁-C₄-Alkylsulfonylamino, Arylcarbonylamino oder Arylsulfonylamino substituiert sind,
der Ring D gegebenenfalls 1- bis 3-fach, gleich oder verschieden durch Cl, Br, NO₂, C₁-C₄-Alkyl, C₁-C₄-Alkoxy, Trifluormethyl, Aminosulfonyl, C₁-C₄-(Di)-alkylaminosulfonyl, Aminocarbonyl, C₁-C₄-(Di)alkylaminocarbonyl, C₁-C₄-Alkylsulfonyl, Arylsulfonyl, C₁-C₄-Alkylcarbonylamino, C₁-C₄-Alkoxycarbonylamino, C₁-C₄-Alkylsulfonylamino, Arylcarbonylamino, Arylsulfonylamino, CN oder C₁-C₄-Alkylcarbonyl substituiert ist,

- Ka^{⊕}: die oben angegebene Bedeutung hat, und die
- SO₃^{⊖}Ka^{⊕}-Gruppe: vorzugsweise an Ring A gebunden ist.

Die erfindungsgemäßen Farbstoffe der Formel (I) können in an sich bekannter Weise erhalten werden, indem man entweder eine Azoverbindung der Formel (IV) 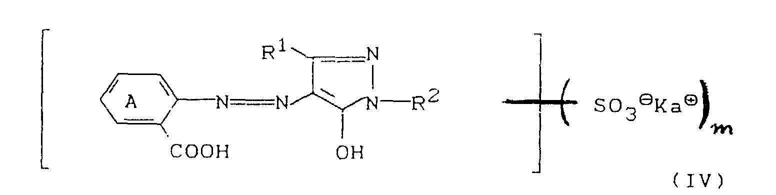 worin
- R¹, R² und Ka^{⊕}: die oben für Formel (I) genannte Bedeutung haben,
- m: für 0 oder 1 steht,
- Ring A: wie für Formel (I) angegeben weiter substituiert sein kann, und
- Ka^{⊕}: die oben angegebene Bedeutung hat,
oder eine Azomethinverbindung der Formel (V) 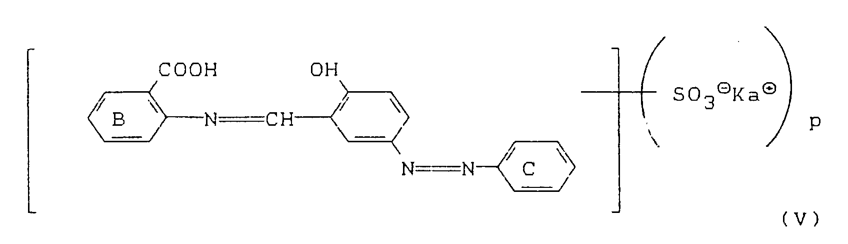 worin
die Ringe B und C wie für die Formel (I) definiert weiter substituiert sein können.
- Ka^{⊕}: die oben angegebene Bedeutung hat,
- p: für 0 oder 1, und die
- SO₃^{⊖}Ka^{⊕}-Gruppe: gegebenenfalls an Ring B und/oder Ring C gebunden ist,

mit einem chromabgebenden Mittel in den 1:1-Chromkomplex überführt und diesen dann jeweils mit dem entsprechenden nichtmetallisierten Farbstoff der Formel (V) bzw. (IV) zum 1:2-Chromkomplex umsetzt.
mit der Bedingung, daß die Summe von m und p der Komponenten (IV) und (V) 1 beträgt.

Wegen ihrer leichten Bildung können anstelle der Azomethinverbindungen der Formel (V) auch Gemische aus je einem Amin der Formel (VI) und einem arylsubstituierten Salicylaldehyd der Formel (VII) 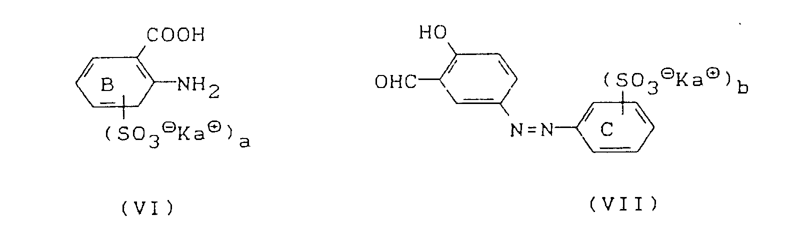 worin
die Ringe B und C wie für Formel (I) definiert weiter substituiert sein können:
Ka^{⊕} die oben angegebene Bedeutung hat, und
a und b für 0 oder 1 stehen,
wobei die Summe von a und b 0 oder 1 beträgt,
eingesetzt werden.

Die Azoverbindungen der Formel (IV) können in bekannter Weise durch Kuppeln von diazotierten Aminen der Formel (VIII) 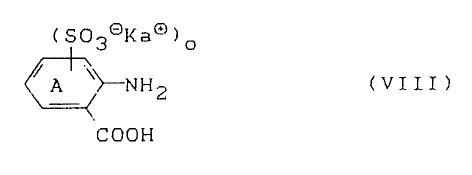 worin
der Ring A wie für Formel (I) definiert weiter substituiert sein kann,
- Ka^{⊕}: die oben angegebene Bedeutung hat, und
- o: für 0 oder 1 steht,
auf Pyrazolone der Formel (IX) 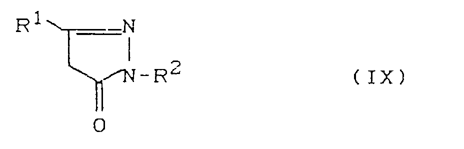 worin
R¹ und R² die für Formel (I) angegebene Bedeutung haben, und für den Fall, daß R² für Aryl steht, dieses gegebenenfalls 1 SO₃^{⊖}Ka^{⊕}-Gruppe enthält, wobei jedoch die Summe der SO₃^{⊖}Ka^{⊕}-Gruppe der Komponenten (VIII) und (IX) 0 oder 1 beträgt, hergestellt werden.

Die arylazo-substituierten Salicylaldehyde der Formel (VII) sind durch Kuppeln der diazotierten Amine der Formel (X) 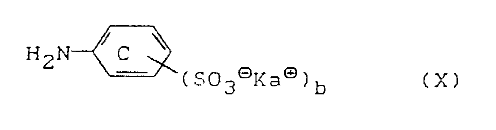 worin
der Ring C, wie für Formel (I) definiert, weiter substituiert sein kann,
Ka^{⊕} die oben angegebene Bedeutung hat, und
b für 0 oder 1 steht,
auf Salicylaldehyd erhältlich.

Geeignete Amine der Formeln (VI) und (VIII) sind beispielsweise:

2-Aminobenzoesäure, 2-Aminobenzoesäure-4- oder -5-sulfonsäure, 2-Aminobenzoesäure-4- oder -5-sulfonamid, 4-, 5- oder 6-Chlor2-aminobenzoesäure, 3,5-Dichlor-2-aminobenzoesäure, 4- oder 5-Nitro-2-aminobenzoesäure.

Geeignete Pyrazolone der Formel (IX) sind beispielsweise in der Deutschen Offenlegungsschrift 3 132 334 beschrieben.

Als Amine der Formel (X) kommen beispielsweise in Frage:

Anilin, 2-, 3- oder 4-Chloranilin, 2,3-, 2,4-, 2,5- oder 3,5-Dichloranilin, 2-, 3- oder 4-Methylanilin, 2,4- oder 2,5-Dimethylanilin, 2-Chlor-5-methylanilin, 2-Methyl-3-, -4- oder -5-chloranilin, 4-Chlor-3-methylanilin, 3-Chlor-4-methylanilin, 2,4-Dichlor-5-methylanilin, 4-Bromanilin, 2-, 3- oder 4-Methoxyanilin, 2-Methoxy-5-methylanilin, 5-Chlor-2-methoxyanilin, 4-Chlor-2,5-dimethoxyanilin, 2-Chlor-4-cyanoanilin, 4-Acetaminoanilin, 4-Benzoylaminoanilin, Anilin-2-, -3-oder -4-sulfonsäure, Anilin-3- oder -4-sulfonamid, Anilin-3- oder -4-carbonamid, 2-Chloranilin-5-sulfonamid, -5-carbonamid oder -5-methylsulfon, 2-Methoxyanilin-5-sulfonamid, 2-Chloranilin- 4- oder -5-sulfonsäure, 4-Chloranilin-3-sulfonsäure, 2,5-Dichloranilin-4-sulfonsäure, 2-Methyl-oder 2-Methoxyanilin-5-sulfonsäure, 4-Methoxyanilin-2-sulfonsäure und 2-Methylanilin-4-sulfonsäure.

Die Überführung einer Azoverbindung der Formel (IV) oder einer Azomethinverbindung der Formel (V) in den 1:1-Chromkomplex erfolgt nach üblichen, an sich bekannten Methoden, indem man beispielsweise die metallfreie Verbindung mit einem Salz des dreiwertigen Chroms, wie Chromfluorid, -chlorid, -sulfat oder -formiat in wäßrigem Medium bei Siedetemperatur oder gegebenenfalls höherer Temperatur umsetzt.

Die sich anschließende Umsetzung eines so hergestellten 1:1-Chromkomplexes mit einer metallfreien Verbindung der Formel (V) bzw. (IV) erfolgt zweckmäßig in schwach alkalischem bis schwach saurem Medium bei Raumtemperatur oder erhöhter Temperatur, vorzugsweise im Bereich von 50 bis 100°C. Die Reaktionspartner werden vorzugsweise in stöchiometrischen Mengen eingesetzt; ein Überschuß an chromhaltiger Verbindung wirkt sich im allgemeinen weniger nachteilig aus als ein Überschuß an chromfreier Verbindung. Die bei der Anlagerung der metallfreien Verbindung an den 1:1-Chromkomplex freiwerdende Säure wird durch Zusatz alkalisch wirkender Mittel bei schwach saurem bis schwach alkalischem pH-Wert, vorzugsweise bei pH 7, abgefangen, beispielsweise durch Zusatz von Hydroxiden oder Carbonaten von Alkalimetallen, wie Lithium-, Natrium- oder Kaliumhydroxid oder -carbonat, von Ammoniak oder organischen Aminen, wie Mono-, Di- oder Triethylamin oder von Tetraalkylammoniumhydroxiden, wie Tetramethylammoniumhydroxid. Vorzugsweise setzt man die alkalisch wirkenden Mittel so zu, daß die Reaktion bei einem konstanten pH abläuft.

Die hier beschriebenen Umsetzungen zu den erfindungsgemäßen unsymmetrischen 1:2-Chromkomplexfarbstoffen können zur Beschleunigung der Reaktion auch in Gegenwart organischer Lösungsmittel durchgeführt werden. Geeignete organische Lösungsmittel sind beispielsweise niedere Alkohole, wie Ethanol, Ketone, wie Ethylmethylketon, Carbonamide, wie Formamid, Dimethylformamid, N-Methyl-pyrrolidon, Glykole, wie Ethylenglykol, 1,2-Propylenglykol, oder vorzugsweise deren Mono-C₁-C₄-alkylether, wie Ethylglykol, 1-Ethoxy-2-propanol.

Am Ende der Reaktion liegen die erfindungsgemäßen Farbstoffe der Formel (I) als Salze der Komplexsäure und der an sie gebundenen SO₃H-Gruppen mit den oben erwähnten alkalisch wirkenden Mitteln vor, beispielsweise als Alkalisalze bei Verwendung von Alkalihydroxiden oder -carbonaten oder als Ammoniumsalze bei Verwendung von Ammoniak, Aminen oder Tetraalkylammoniumhydroxiden.

Die so hergestellten 1:2-Chromkomplexfarbstoffe können durch Aussalzen mit Alkalisalzen, Sprühtrocknen oder Eindampfen auf der Walze isoliert und mit den üblichen Stell- und Hilfsmitteln zu wasserlöslichen Präparationen verarbeitet werden.

Die Zubereitung zu flüssigen Präparationen unter Verwendung von organischen Lösungsmitteln, gegebenenfalls im Gemisch mit Wasser und gegebenenfalls unter Zusatz von hydrotropen Mitteln, wie beispielsweise Harnstoff, ist ebenfalls möglich und insofern empfehlenswert, als die Synthese der erfindungsgemäßen Farbstoffe oder zumindest der letzte Schritt dieser Synthese und die Herstellung ihrer Lösungen in einer Stufe und einem Topf ohne Zwischenisolierung vollzogen werden kann. Geeignete Lösungsmittel für dieses Verfahren sind insbesondere Glykole, Ethylenglykol oder 1,2-Propylenglykol oder vorzugsweise deren Mono-C₁-C₄-alkylether, wie Ethylglykol oder 1-Ethoxy-2-propanol.

Die erfindungsgemäßen 1:2-Chromkomplexfarbstoffe der Formel (I) können in beliebiger an sich üblicher Form eingesetzt werden, sei es als Pulver, als Granulat oder als Lösung. Die in Wasser gut löslichen oder die mit Wasser gut mischbaren flüssigen Präparationen, die je nach Einstellung weitere übliche Zusätze enthalten können, wie anorganische Salze, Dispergiermittel, Emulgatoren, Entschäumer, Entstaubungs-, Netz-, Konservierungsmittel u. a., eignen sich zum Färben und Bedrucken von mit anionischen Farbstoffen färbbaren Substraten.

Substrate, die mit den erfindungsgemäßen 1:2-Chromkomplexfarbstoffen gefärbt werden können, sind vornehmlich natürliche und synthetische amidgruppenhaltige Materialien, wie Wolle, Seide, Leder, Felle, Polyamid- und Polyurethanfasern.

Bevorzugtes Anwendungsgebiet ist das Färben und Bedrucken von Ledersubstraten nach verschiedenen, an sich bekannten Applikationen. Dabei eignen sich die festen Präparationen der erfindungsgemäßen Farbstoffe vornehmlich zum Färben im Faß, während die flüssigen Präparationen neben der Faßfärbung auch zum Färben auf Durchlaufmaschinen, zum Anfärben von Appreturen und Zurichtflotten und vor allem zum Spritzfärben mit und ohne Appretur geeignet sind. Als Ledersubstrat kommen beliebige Ledersorten in Frage, insbesondere Narbenleder, Veloursleder, Spaltvelours, Wildleder, Nubukleder verschiedener Provenienz, insbesondere von Rind, Kalb, Ziegen, Schwein, Schaf. Die Leder können beliebig gegerbt, zum Beispiel vegetabilisch, mineralisch, synthetisch oder kombiniert, und zusätzlich noch mit üblichen, insbesondere vegetabilischen, mineralischen oder synthetischen Gerbstoffen nachgegerbt sein.

Infolge der mannigfaltigen Gerbung mit Gerbstoffen unterschiedlich anionischen Charakters resultieren Leder mit unterschiedlicher Affinität gegenüber anionischen Farbstoffen. Die festen und flüssigen Farbstoffpräparationen ziehen bevorzugt aus wäßrigem Bad unter den an sich bekannten Temperatur- und pH-Bedingungen auch auf weniger farbstoffaffinen Ledern gut auf. Sie färben egal und weisen bei zunehmendem Farbstoffangebot ein gutes Aufbauvermögen auf, ohne daß es zu unerwünschten Bronzierungseffekten kommt.

Die erzielten, im allgemeinen gelben Färbungen sind licht- und naßecht; die Lederfärbungen zeichnen sich zudem durch gute Schweiß- und Diffusionsechtheit aus. Desweiteren sind die erfindungsgemäßen gelben Farbstoffe sehr gut kombinierbar mit den im allgemeinen braunen Farbstoffen der Deutschen Offenlegungsschrift 3 121 923, die dort unter der Formel (I) angegeben sind. Die gute Kombinierbarkeit macht sich besonders beim Färben von Leder günstig bemerkbar. So zeigen derartige in der Zusammensetzung gleichbleibende Farbstoffgemische bei Änderung des Farbstoffangebotes, der Applikation und des Ledertyps keine signifikante Abweichungen in der Nuance, und auch beim Anschleifen der gefärbten Leder ist praktisch kein Farbunterschied zwischen der Oberfläche und den darunter liegenden Schichten zu erkennen.

Unsymmetrische 1:2-Chromkomplexe aus Azomethin- und Azoverbindungen sind bereits aus dem Stand der Technik bekannt. So werden in der DE-A 2 723 155 und der DE-A 2 735 287 derartige Chromkomplexe mit drei Sulfogruppen beschrieben. Aus der EP-A 0 072 501 sind derartige Chromkomplexe bekannt, die in einem Phenylteil der Azomethinkomponente zwingend eine Nitrogruppe enthalten. Diese bekannten Chromkomplexfarbstoffe sind jedoch nicht in allen Anforderungen zufriedenstellend.

### Beispiele

### Beispiel 1

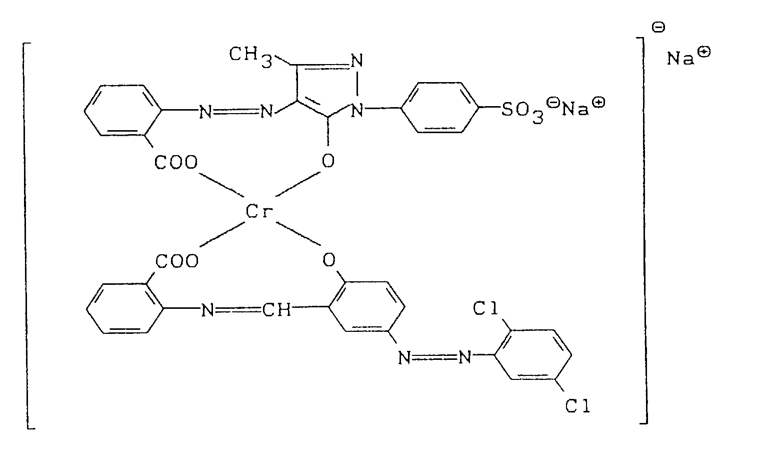

0,1 Mol Anthranilsäure werden in 500 ml Wasser verrührt und durch Zutropfen von 20 ml 5N Natronlauge gelöst. In die Lösung werden 0,1 Mol Chrom-1:1-Komplex des Farbstoffes aus diazotierter Anthranilsäure und 1-(4'-Sulfophenyl)-3-methyl-5-pyrazolon und 0,1 Mol Farbstoff aus diazotiertem 2,5-Dichloranilin und Salicylaldehyd eingetragen. Das Gemisch wird gut verrührt und durch Zugabe von 5N Natronlauge auf pH 6,9 bis 7,1 eingestellt. Man erwärmt innerhalb einer Stunde auf 85°C und hält dabei den pH-Wert mit 5N Natronlauge bei 6,9 bis 7,1. Bei Erreichen von 85°C entsteht allmählich eine gelbbraune Lösung, die noch eine Stunde lang bei dieser Temperatur und pH 6,9 bis 7,1 gehalten wird, bis die drei Ausgangsverbindungen bis auf einen Rest von höchstens 1 Mol-% verschwunden sind. Nach beendeter Reaktion wird die Lösung sprühgetrocknet. Man erhält ein gelbbraunes, gut wasserlösliches Pulver, welches Wolle, Polyamid und Leder in gelben Tönen von guten Echtheiten färbt.

### Beispiele 2 bis 25

Verfährt man wie in Beispiel 1, variiert aber die Substitution in den Ringen A, B und C, so erhält man als Beispiele 2 bis 25 weitere wertvolle Farbstoffe, deren Formel und Nuance aus Tabelle 1 hervorgehen.

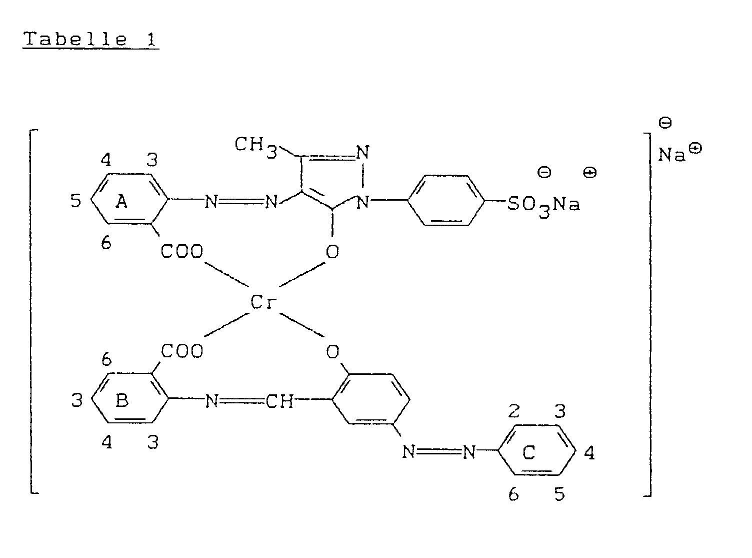

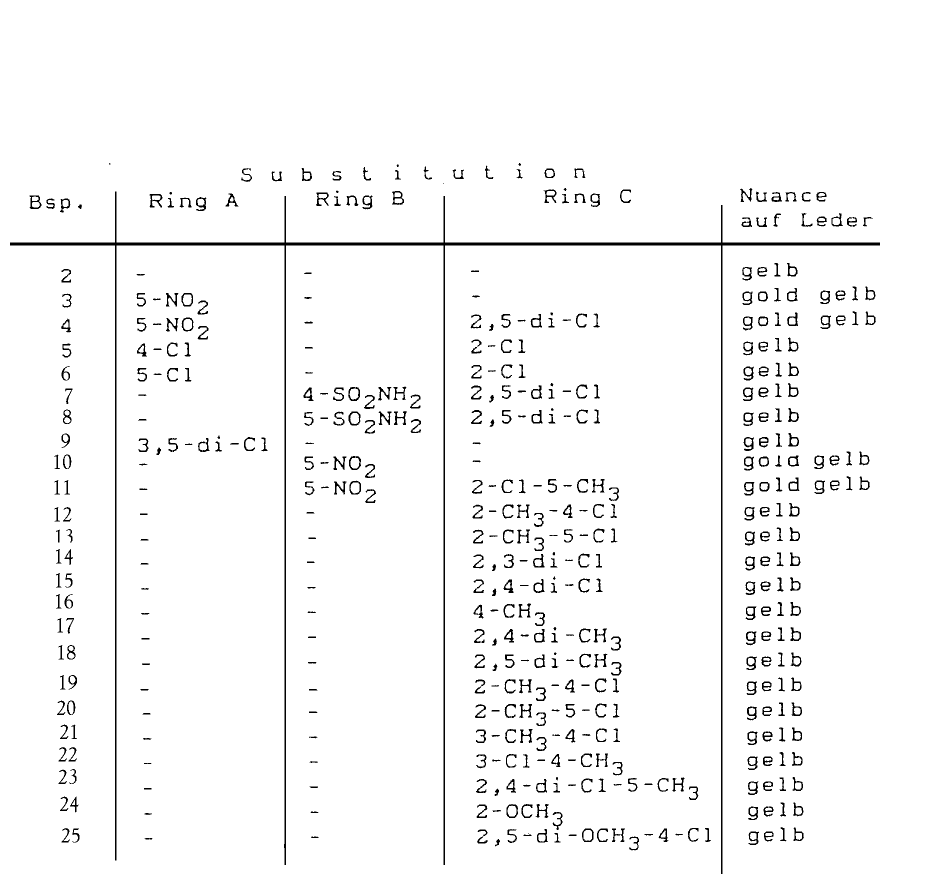

### Beispiel 26

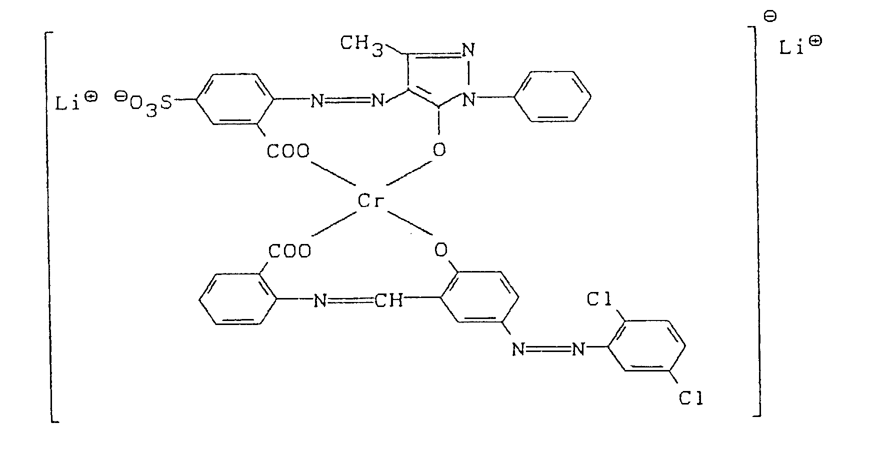

0,1 Mol 1:1-Chromkomplex des Azofarbstoffes aus diazotierter 2-Aminobenzoesäure-5-sulfonsäure und 1-Phenyl-3-methyl-5-pyrazolon wird in Form des wasserfeuchten Preßkuchens in 200 g 1-Ethoxy-2-propanol angerührt und nacheinander mit 0,1 Mol 2-Aminobenzoesäure, 4,2 g LiOH^{.}H₂O und 0,1 Mol Azofarbstoff aus diazotiertem 2,5-Dichloranilin und Salicylaldehyd versetzt. Die Suspension wird innerhalb einer Stunde auf 80°C erwärmt und die bei der Reaktion freiwerdende Säure durch Zutropfen von wäßriger Lithiumhydroxidlösung bei pH 6,9 bis 7,1 abgefangen. Nach etwa einer Stunde bei 80°C und pH 6,9 bis 7,1 sind die drei Ausgangsverbindungen zum unsymmetrischen 1:2-Chromkomplex zusammengetreten. Nach Abkühlen auf Raumtemperatur liegt eine gelbbraune Lösung vor, welche in dieser Form beim Spritz- und Tauchfärben von Leder gelbe nichtbronzierende, diffusionsechte und gut deckende Färbungen liefert. Der λₘₐₓ-Wert der wäßrigen Lösung beträgt 412 nm.

### Beispiele 27 bis 61

Die folgende Tabelle stellt als Beispiel 27 bis 61 weitere unsymmetrische Chromkomplexfarbstoffe dar, die, wie unter Beispiel 26 beschrieben, erhältlich sind. Die Lösungen dieser Farbstoffe liefern beim Faß-, Tauch- und Spritzfärben auf Leder echte Färbungen, deren Nuance in der letzten Spalte der Tabelle angegeben ist.

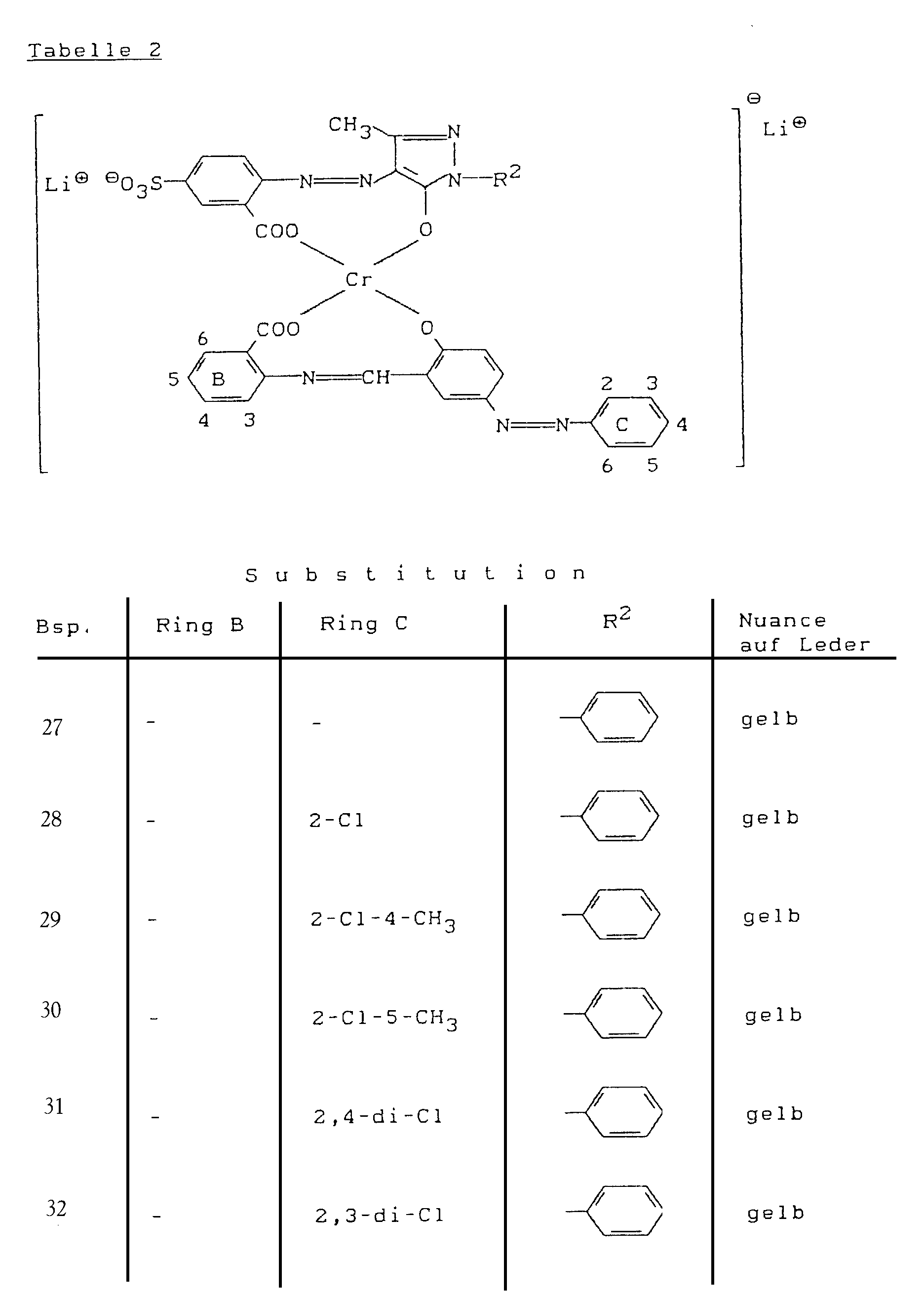

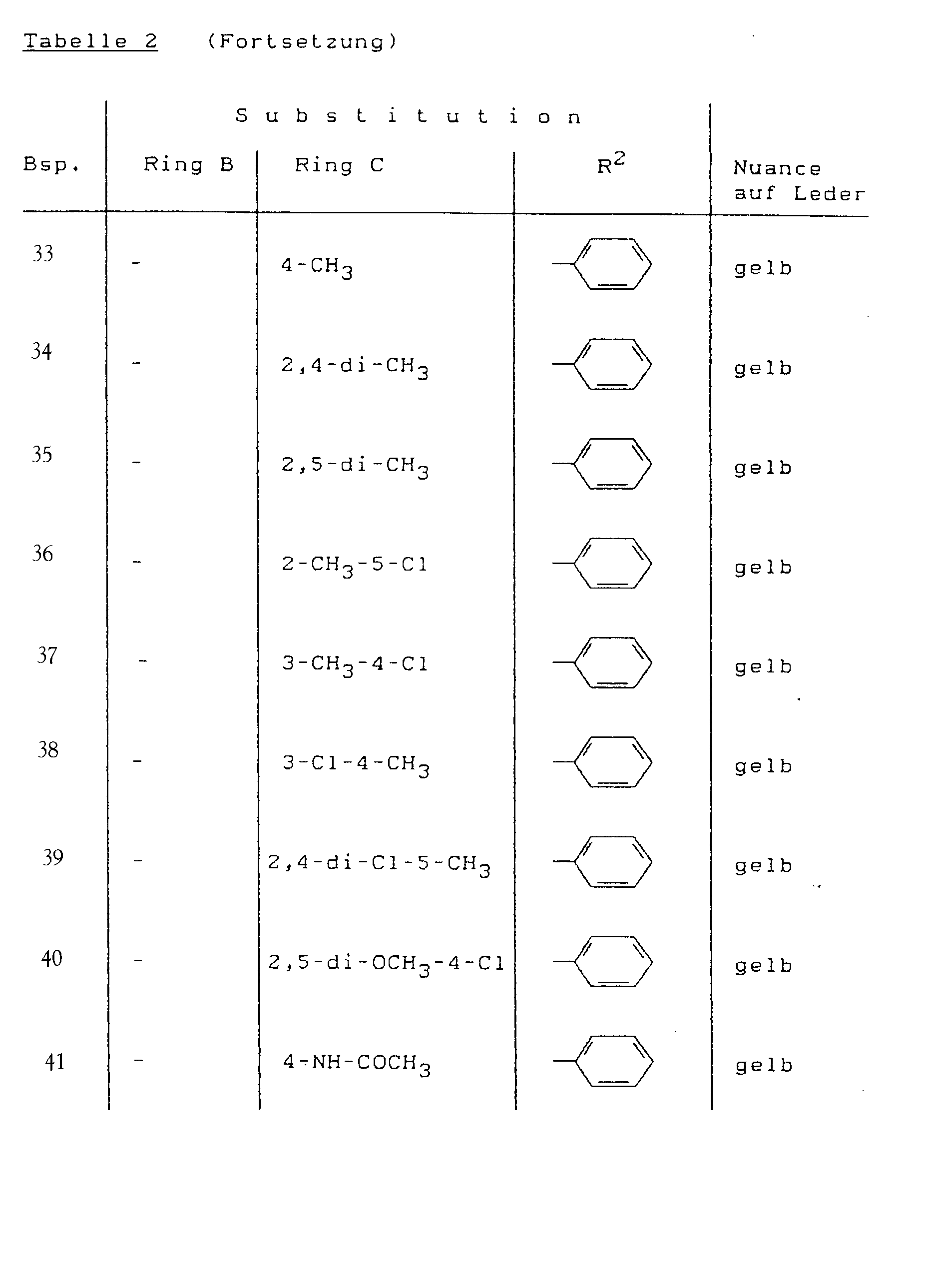

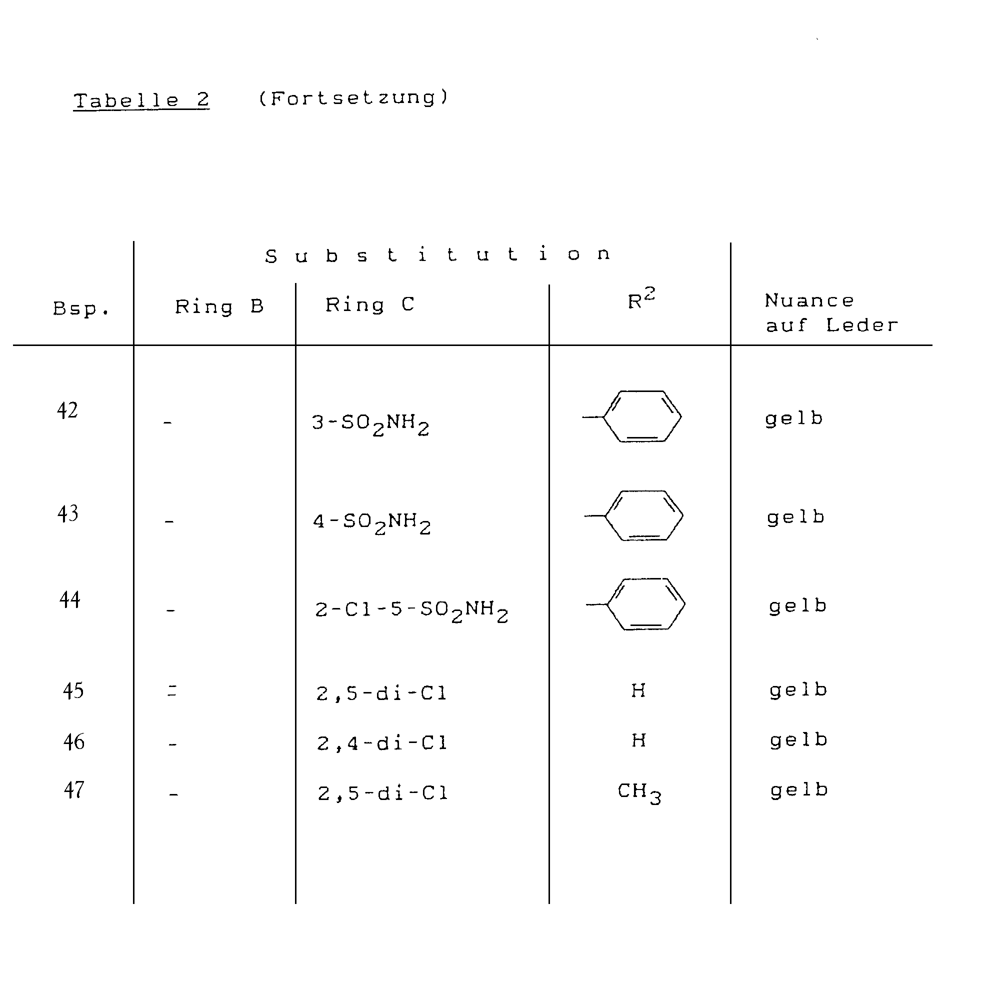

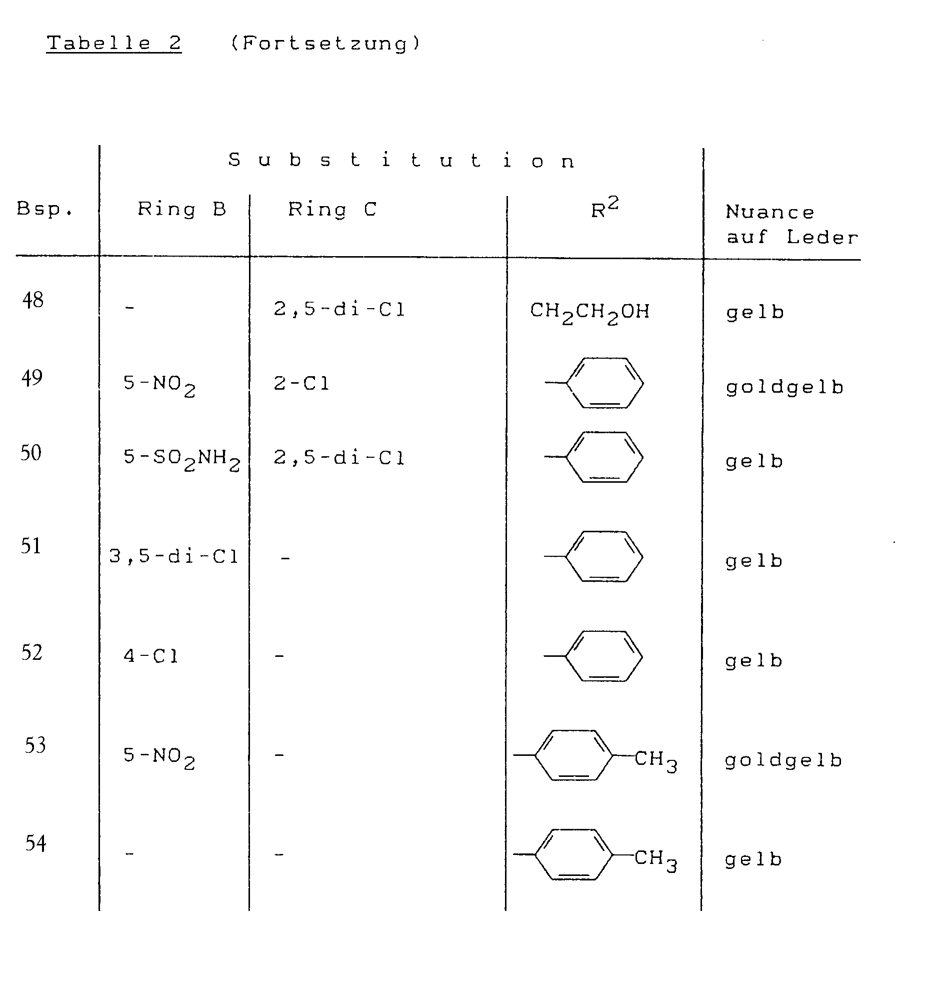

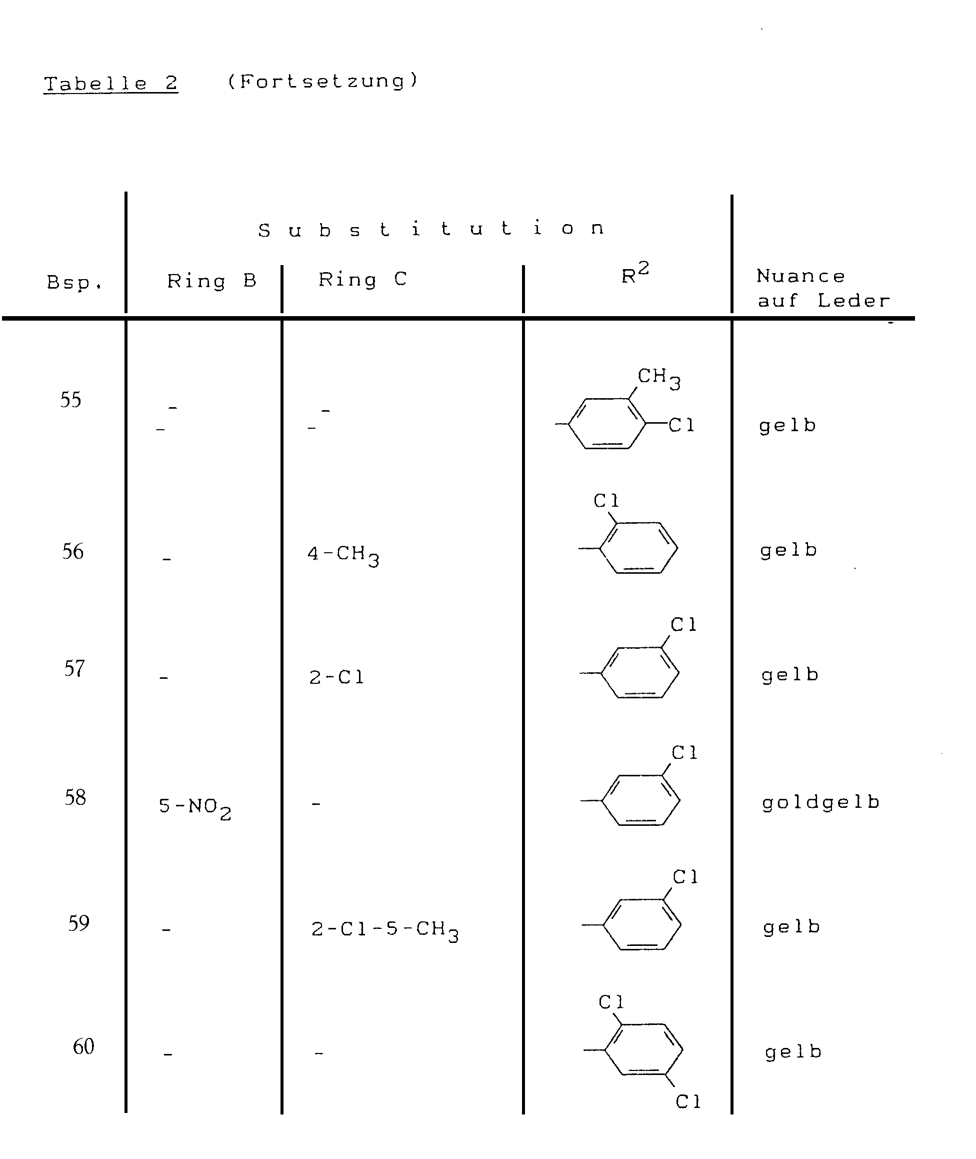

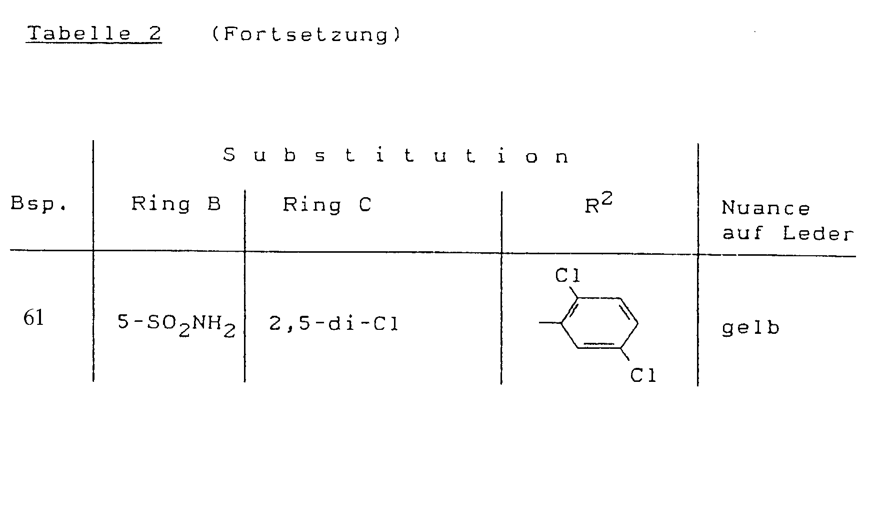

### Beispiel 62

0,1 Mol brauner 1:2-Chromkomplexfarbstoff der Formel 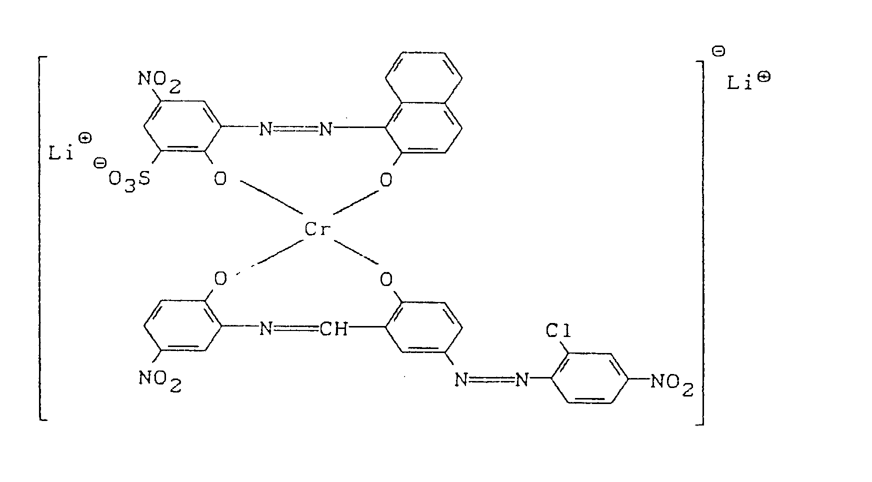 und 0,16 Mol gelber 1:2-Chromkomplexfarbstoff der Formel 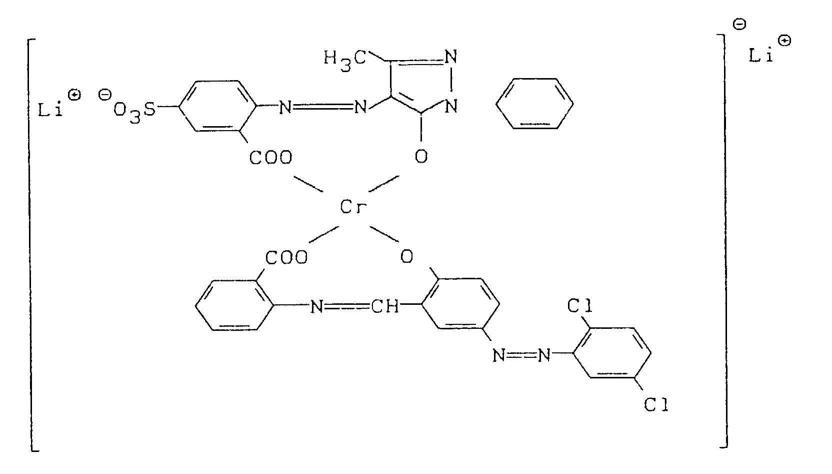 werden in 900 ml Wasser und 500 g 1-Ethoxy-2-propanol bei 50°C gelöst. Man läßt auf Raumtemperatur abkühlen, filtriert über ein Papierfilter und erhält eine dunkelbraune, konzentrierte und lagerstabile Farbstofflösung. Mit dieser Lösung erzielt man auf Ledern unterschiedlicher Gerbung bei der Faß-, Tauch- und Spritzfärbung gleichmäßige, im Farbton nicht voneinander abweichende gelbstichige Mittelbraunfärbungen.

### Beispiel 63

0,1 Mol brauner 1:2-Chromkomplexfarbstoff der Formel 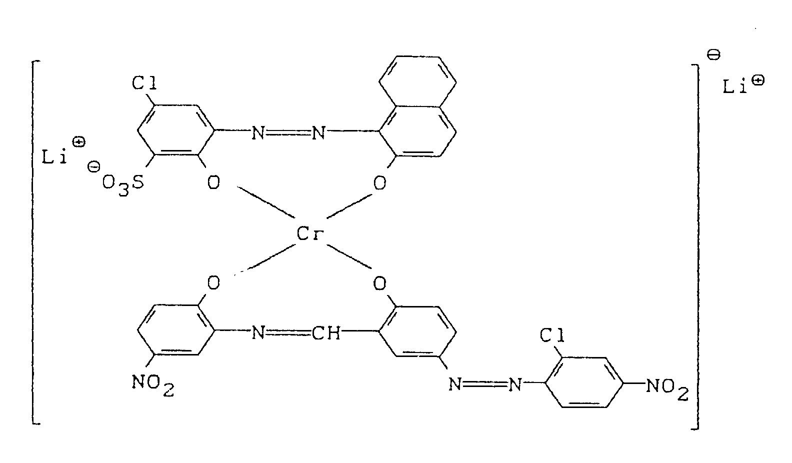 und 0,1 Mol gelber 1:2-Chromkomplexfarbstoff des vorangehenden Beispiels werden durch Erwärmen in 800 ml Wasser und 400 g 1-Ethoxy-2-propanol bei 50°C gelöst. Die nach dem Klären anfallende dunkelbraune konzentrierte Farbstofflösung ist über mehrere Monate hin beständig. Sie gibt unter den üblichen Bedingungen auf unterschiedlich gegerbten Ledern egale und echte Färbungen in gelbstichig braunen Tönen, die von Leder zu Leder sehr gleichmäßig sind.

## Patentansprüche

1. 1:2-Chromkomplexfarbstoffe der Formel (I) 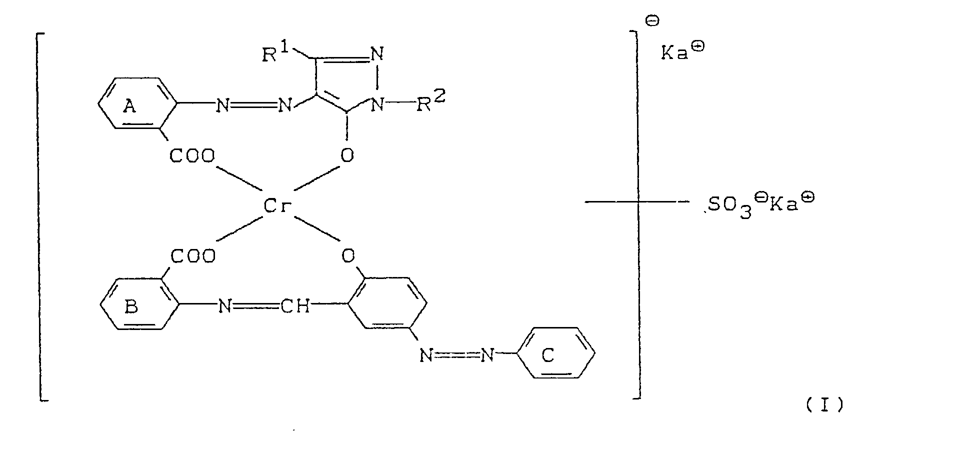 worin
R¹ für Alkyl, Aryl, Alkoxycarbonyl, Aminocarbonyl oder CN,
R² für H, Alkyl oder Aryl,
Ka^{⊕} für ein Kation steht,
und die Sulfogruppe -SO₃^{⊖}Ka^{⊕} an Ring A, B oder C oder an R², falls dieses Aryl bedeutet, gebunden ist und die Ringe A, B und C und die Substituenten R¹ und R² weitere in der Chemie der Metallkomplexfarbstoffe übliche Substituenten mit Aufnahme von Sulfo tragen können,
mit der Maßgabe, daß Ring C keine Nitrogruppe enthält.

2. Farbstoffe gemäß Anspruch 1 der Formel 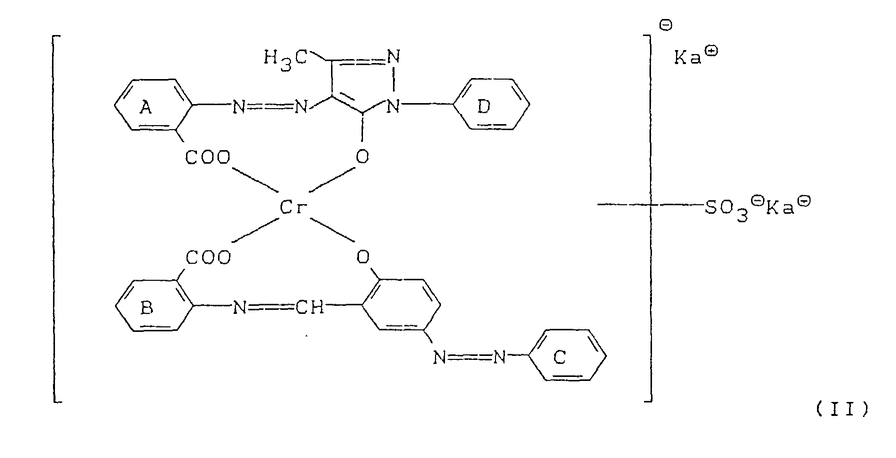 worin
die Ringe A, B und C wie in Anspruch 1 definiert weiter substituiert sein können,
der Ring D weitere in der Chemie der Metallkomplexfarbstoffe übliche Substituenten tragen kann,
Ka^{⊕} die in Anspruch 1 angegebene Bedeutung hat, und die
SO₃^{⊖}Ka^{⊕}-Gruppe am Ring A, B, C oder D gebunden ist.

3. Farbstoffe gemäß Anspruch 1 der Formel 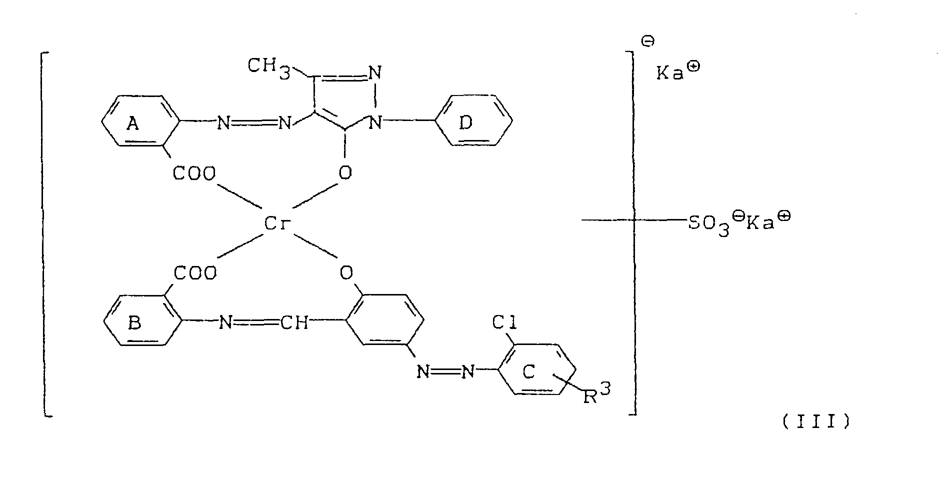 worin
R³ für H, Cl, OCH₃, SO₂NH₂ oder CH₃ steht,
die Ringe A und B jeweils gegebenenfalls 1 bis 3-fach, gleich oder verschieden durch Cl, NO₂, C₁-C₄-Alkyl, Aminosulfonyl, C₁-C₄- (Di)-alkylaminosulfonyl, C₁-C₄-Alkylcarbonylamino, C₁-C₄-Alkoxycarbonylamino, C₁-C₄-Alkylsulfonylamino, Arylcarbonylamino oder Arylsulfonylamino substituiert sind,
der Ring D gegebenenfalls 1- bis 3-fach, gleich oder verschieden durch Cl, Br, NO₂, C₁-C₄-Alkyl, C₁-C₄- Alkoxy, Trifluormethyl, Aminosulfonyl, C₁-C₄-(Di)- alkylaminosulfonyl, Aminocarbonyl, C1-C4-(Di)alkylaminocarbonyl, C₁-C₄-Alkylsulfonyl, Arylsulfonyl, C₁-C₄-Alkylcarbonylamino, C₁-C₄-Alkoxycarbonylamino, C₁-C₄-Alkylsulfonylamino, Arylcarbonylamino, Arylsulfonylamino, CN oder C₁-C₄-Alkylcarbonyl substituiert ist,
Ka^{⊕} die in Anspruch 1 angegebene Bedeutung hat, und die
SO₃^{⊖}Ka^{⊕} -Gruppe an Ring A, B, C oder D gebunden ist.

4. Farbstoffe der Ansprüche 1 bis 3, worin die SO₃^{⊖}Ka^{⊕}-Gruppe an Ring A gebunden ist.

5. Farbstoffpräparation enthaltend einen Farbstoff der Ansprüche 1 bis 4 sowie ein organisches Lösungsmittel.

6. Verwendung der Farbstoffe der Ansprüche 1 bis 4 zum Färben von natürlichen und synthetischen amidgruppenhaltigen Materialien.

7. Verwendung der Farbstoffe der Ansprüche 1 bis 4 zum Färben von Leder.

## Claims

1. 1:2 Chromium complex dyestuffs of the formula (I) 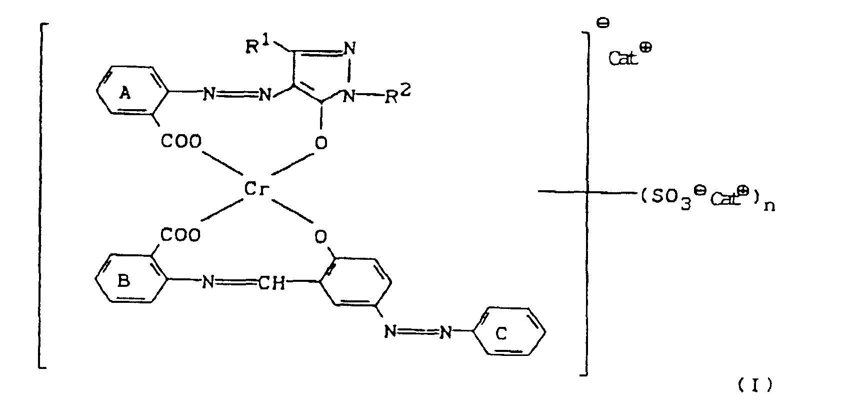 in which
R¹ represents alkyl, aryl, alkoxycarbonyl, amino carbonyl or CN,
R² represents H, alkyl or aryl,
Cat^{⊕} represents a cation,
and the sulpho group -SO₃-Cat^{⊕} is bound to the ring A, B or C or to R², if R² denotes aryl, and the rings A, B and C and substituents R¹ and R² can carry further substituents customary in the chemistry of metal complex dyestuffs, with the exception of sulpho with the proviso that the ring C does not contain a nitro group.

2. Dyestuffs according to Claim 1 of the formula 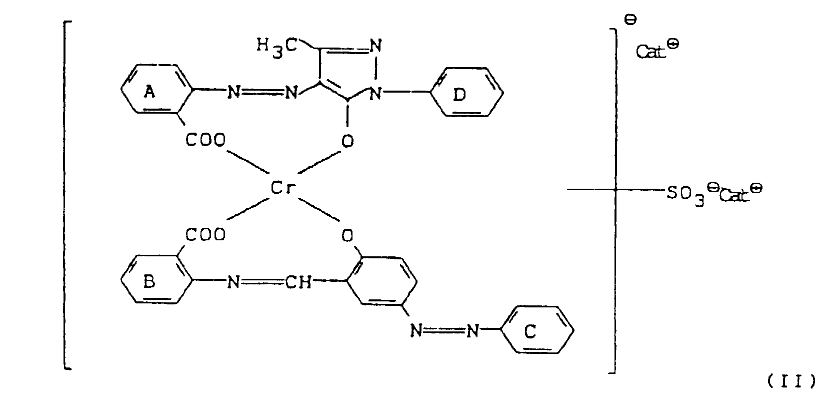 in which
the rings A, B and C can be further substituted as defined in Claim 1,
the ring D can carry further substituents customary in the chemistry of metal complex dyestuffs,
Cat^{⊕} has the meaning given in Claim 1, and the
SO₃-Cat^{⊕} group is bound to the ring A, B, C or D.

3. Dyestuffs according to Claim 1 of the formula 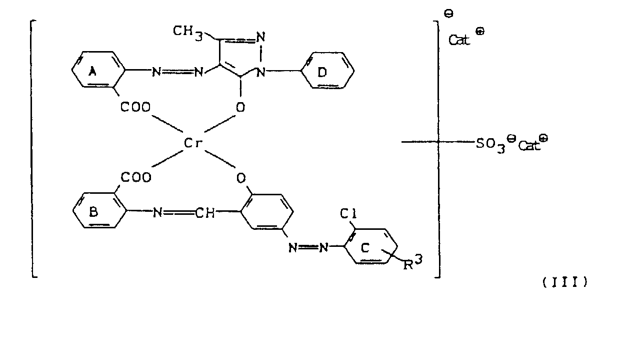 in which
R³ represents H, Cl, OCH₃, SO₂NH₂ or CH₃,
the rings A and B are each unsubstituted or mono- to trisubstituted by identical or different substituents from the group consisting of Cl, NO₂, C₁-C₄-alkyl, aminosulphonyl, C₁-C₄-(di)-alkylaminosulphonyl, C₁-C₄-alkylcarbonylamino, C₁-C₄-alkoxycarbonylamino, C₁-C₄-alkylsulphonylamino, arylcarbonylamino or arylsulphonylamino,
the ring D is unsubstituted or mono- to trisubstituted by identical or different substituents from the group consisting of Cl, Br, NO₂, C₁-C₄-alkyl, C₁-C₄-alkoxy, trifluoromethyl, aminosulphonyl, C₁-C₄-(di)alkylaminosulphonyl, aminocarbonyl, C₁-C₄-(di)alkylaminocarbonyl, C₁-C₄-alkylsulphonyl, arylsulphonyl, C₁-C₄-alkylcarbonylamino, C₁-C₄-alkoxycarbonylamino, C₁-C₄-alkylsulphonylamino, arylcarbonylamino, arylsulphonylamino, CN or C₁-C₄-alkylcarbonyl,
Cat^{⊕} has the meaning given in Claim 1, and the
SO₃-Cat^{⊕} group is bound to the ring A, B, C or D.

4. Dyestuffs of Claims 1 to 3, in which the SO₃-Cat^{⊕} group is bound to the ring A.

5. Dyestuff preparation containing a dyestuff of Claims 1 to 4 and an organic solvent.

6. Use of the dyestuffs of Claims 1 to 4 for the dyeing of natural and synthetic amido-containing materials.

7. Use of the dyestuffs of Claims 1 to 4 for the dyeing of leather.

## Revendications

1. Colorants complexes de chrome 1:2 de formule (I) 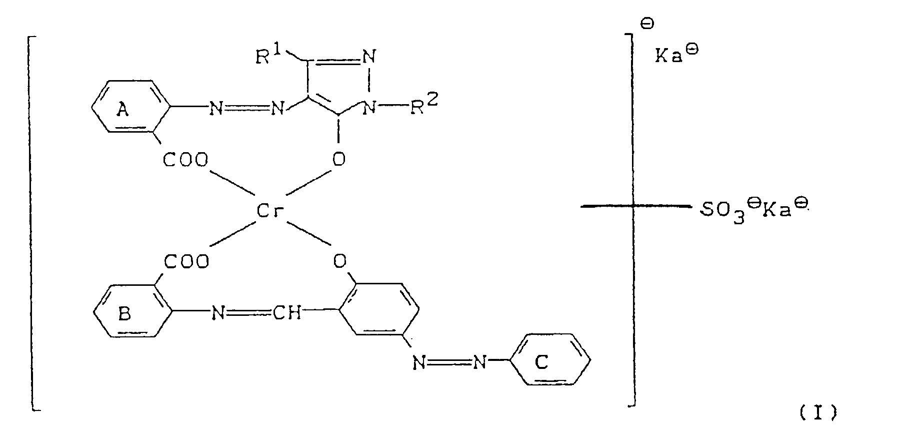 dans laquelle
R¹ représente un reste alkyle, aryle, alcoxycarbonyle, aminocarbonyle ou CN,
R² représente H ou un reste alkyle ou aryle,
Ka^{⊕} représente un cation,
et le groupe sulfo -SO₃^{⊖}Ka^{⊕} est lié au noyau A, B ou C ou à R² dans le cas où celui-ci représente un reste aryle, et les noyaux A, B et C et les substituants R¹ et R² peuvent porter d'autres substituants classiques dans la chimie des colorants de type complexe métallique, à l'exception de groupes sulfo,
à condition que le noyau C ne contienne pas de groupe nitro.

2. Colorants selon la revendication 1, de formule 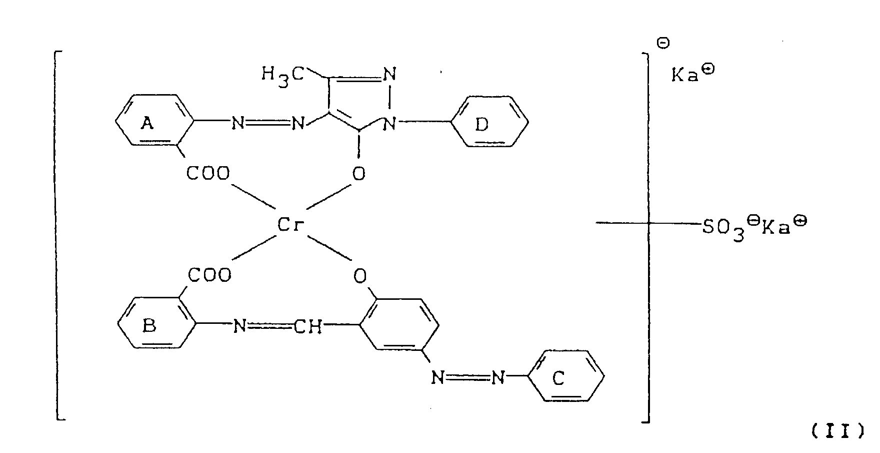 dans laquelle
les noyaux A, B et C peuvent avoir d'autres substituants de la manière définie dans la revendication 1,
le noyau D peut porter d'autres substituants classiques dans la chimie des colorants de type complexe métallique,
Ka^{⊕} a la signification donnée dans la revendication 1, et
le groupe SO₃^{⊖}Ka^{⊕} est lié au noyau A, B, C ou D.

3. Colorants selon la revendication 1, de formule (III) 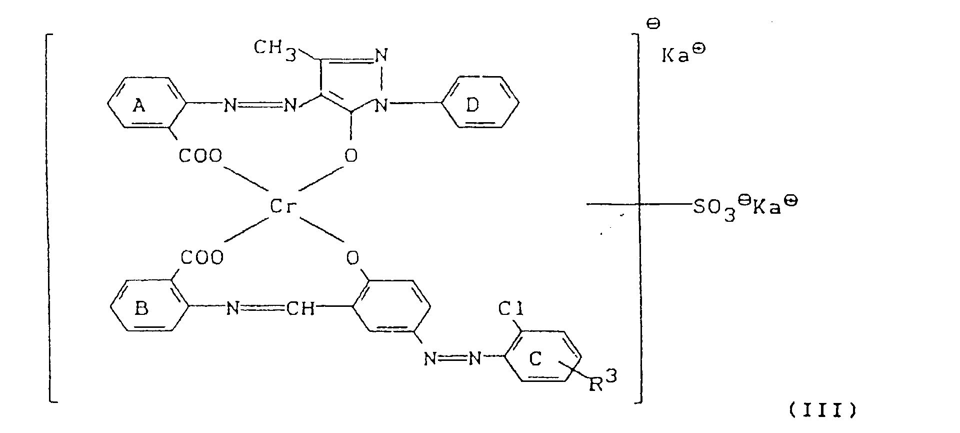 dans laquelle
R³ est H, Cl, OCH₃, SO₂NH₂ ou CH₃,
les noyaux A et B sont chacun éventuellement substitués par 1 à 3 substituants identiques ou différents choisis parmi les restes Cl, NO₂, alkyle en C₁-C₄, aminosulfonyle, (di)(alkyl en C₁-C₄)aminosulfonyle, (alkyl en C₁-C₄)carbonylamino, (alcoxy en C₁-C₄)carbonylamino, alkylsulfonylamino en C₁-C₄, arylcarbonylarnino ou arylsulfonylamino,
le noyau D est éventuellement substitué par 1 à 3 substituants identiques ou différents choisis parmi les restes Cl, Br, NO₂, alkyle en C₁-C₄, alcoxy en C₁-C₄, trifluorométhyle, aminosulfonyle, (di)(alkyl en C₁-C₄)aminosulfonyle, aminocarbonyle, (di)(alkyl en C₁-C₄)aminocarbonyle, alkylsulfonyle en C₁-C₄, arylsulfonyle, (alkyl en C₁-C₄)carbonylamino, (alcoxy en C₁-C₄)carbonylamino, alkylsulfonylamino en C₁-C₄, arylcarbonylamino, arylsulfonylamino, CN ou (alkyl en C₁-C₄)carbonyle,
Ka^{⊕} a la signification donnée dans la revendication 1, et
le groupe SO₃^{⊖}Ka^{⊕} est lié au noyau A, B, C ou D.

4. Colorants selon les revendications 1 à 3, dans lesquels le groupe SO₃^{⊖}Ka^{⊕} est lié au noyau A.

5. Préparation de colorant contenant un colorant selon les revendications 1 à 4 et un solvant organique.

6. Utilisation des colorants selon les revendications 1 à 4 pour la teinture de matières naturelles et synthétiques contenant des groupes amide.

7. Utilisation des colorants des revendications 1 à 4 pour la teinture du cuir.
